# EUROPEAN PATENT APPLICATION

(11) **EP 3 249 015 A1**
(43) Date of publication of application: **29.11.2017**
(21) Application number: 15878895.0
(22) Date of filing: 04.11.2015
(51) Int. Cl.: C08L 83/06, C08K 5/5415, C08K 5/544, C09D 7/12, C09D 183/06, C09J 11/06, C09J 183/06

(54) **ROOM TEMPERATURE-CURABLE ORGANOPOLYSILOXANE COMPOSITION**

(30) Priority: 21.01.2015 JP 2015009326
(71) Applicant: Shin-Etsu Chemical Co., Ltd., Tokyo 100-0004 (JP)
(72) Inventor: UTA Akira, Annaka-shi Gunma 379-0224 (JP); SAKAMOTO Takafumi, Annaka-shi Gunma 379-0224 (JP); HIROKAMI Munenao, Annaka-shi Gunma 379-0224 (JP)
(74) Representative: Zacco GmbH
(86) International application number: PCT/JP2015/081034
(87) International publication number: WO 2016/117206

(57) **Abstract**

Provided is a room temperature-curable organopolysiloxane composition capable of yielding, through curing, a silicone rubber cured product exhibiting a favorable adhesiveness and water-immersion adhesiveness to general purpose resins (acrylic (AC) resin, polybutylene terephthalate (PBT) resin, polycarbonate (PC) resin and acrylonitrile-butadiene-styrene (ABS) resin) and metals (aluminum, copper and stainless steel). The room temperature-curable organopolysiloxane composition contains
(A) 100 parts by mass of a diorganopolysiloxane having silicon atom-bonded hydroxyl groups and/or hydrolyzable groups at both terminals of a molecular chain, and exhibiting a viscosity of 20 to 1,000,000 mPa·s at 25°C,
(B) a hydrolyzable silane compound and/or a partial hydrolysis condensate thereof, having at least three silicon atom-bonded hydrolyzable groups in one molecule, the component (B) being other than the component (A) and in an amount of 0.1 to 40 parts by mass per 100 parts by mass of the component (A) and
(C) a hydrolyzable silane compound and/or a partial hydrolysis condensate thereof, having in one molecule a hydrolyzable group(s) and two nitrogen atoms of which one nitrogen atom is bonded to a silicon atom through a divalent hydrocarbon group having at least five carbon atoms, the component (C) being other than the components (A) and (B) and in an amount of 0.001 to 10 parts by mass per 100 parts by mass of the component (A).

## Description

### TECHNICAL FIELD

The present invention relates to a room temperature-curable organopolysiloxane composition; particularly to a room temperature-curable organopolysiloxane composition capable of yielding, through curing, a silicon rubber superior in adhesiveness, and to various goods employing a cured product of such composition.

### BACKGROUND ART

There have been conventionally known organopolysiloxane compositions that can be turned into silicone rubbers (elastomer type elastic bodies) when cured at room temperature, and these organopolysiloxane compositions have been widely used in industry. With regard to the mechanisms by which these organopolysiloxane compositions are cured at room temperature, there are known, for example, a mechanism in which curing takes place through a hydrosilylation reaction; a mechanism in which curing takes place by ultraviolet rays; and a mechanism in which curing takes place through a condensation reaction between silicon atom-bonded hydrolyzable groups and hydroxyl groups. Among these mechanisms, organopolysiloxane compositions that are curable through condensation reactions can be easily cured at room temperature to yield rubber type elastic bodies (silicone rubbers), and also have an advantage of not easily causing curing inhibition due to impurities as are the cases with hydrosilylation reactions or the like. Therefore, organopolysiloxane compositions that are curable though condensation reactions at room temperature are widely used in fields of, for example, in-vehicle gaskets and sealing materials, architectural sealants, and electric/electronic parts.

When used for the aforementioned purposes, one important element(s) are the adhesiveness and water-immersion adhesiveness of a cured silicone rubber to a base material. Silicone rubbers have been used for various outdoor purposes due to their high weather resistances and chemical stabilities. However, silicone rubbers have a poor adhesiveness to various base materials, and in order to improve the adhesiveness of room temperature-curable silicone rubbers, there has been widely adopted a method of adding silane compounds containing, for example, amino groups, epoxy groups, methacryl groups and mercapto groups.

Conventionally, as an amino group-containing alkoxysilane compound, there have been known γ-aminopropyltriethoxysilane, γ-aminopropyltrimethoxysilane, γ-aminopropylmethyldimethoxysilane, γ-aminopropylmethyldiethoxysilane, N-β-aminoethyl-γ-aminopropylmethyldimethoxysilane, N-benzyl-γ-aminopropyltrimethoxysilane, N-phenyl-γ-aminopropyltrimethoxysilane, β-aminoethylaminomethyl phenethyltrimethoxysilane, N-[m-aminomethylphenylmethyl]-γ-aminopropyltrimethoxysilane and the like (Patent document 1).

As an epoxy group-containing alkoxysilane compound, there have been known 2-(3,4-epoxycyclohexyl) ethyltrimethoxysilane, 3-glycidoxypropyltrimethoxysilane, 3-glycidoxypropylmethyldiethoxysilane, 3-glycidoxypropyltriethoxysilane and the like (Patent document 2).

As a methacryl group-containing alkoxysilane compound, there have been known 3-methacryloxypropyltrimethoxysilane, 3-methacryloxypropyltriethoxysilane, 3-methacryloxypropylmethyldimethoxysilane, 3-methacryloxypropylmethyldiethoxysilane and the like (Patent document 3).

As a mercapto group-containing alkoxysilane compound, there have been known 3-mercaptopropyltrimethoxysilane, 3-mercaptopropylmethyldimethoxysilane and the like (Patent document 4). In this way, although many alkoxysilane compounds have been used as adhesion aids, there has been a growing demand to improve adhesiveness and water-immersion adhesiveness to base materials.

### PRIOR ART DOCUMENT

### Patent Document

Patent document 1: JP-A-2008-163143
Patent document 2: JP-A-2004-307723
Patent document 3: JP-A-2006-156964
Patent document 4: JP-A-Hei 9-12861

### SUMMARY OF THE INVENTION

### Problem to be solved by the invention

Thus, it is an object of the present invention to provide a room temperature-curable organopolysiloxane composition that exhibits a favorable workability in an uncured state, and is capable of yielding, through curing, a silicone rubber cured product having a favorable adhesiveness and water-immersion adhesiveness to general purpose resins (acrylic (AC) resin, polybutylene terephthalate (PBT) resin, polycarbonate (PC) resin and acrylonitrile-butadiene-styrene (ABS) resin) and metals (aluminum, copper and stainless steel).

### Means to solve the problem

The inventors of the present invention diligently conducted a series of studies and completed the invention as follows. That is, the inventors found that by adding to a particular organopolysiloxane composition a particular hydrolyzable silane compound having two nitrogen atoms in one molecule and/or a partial hydrolysis condensate thereof, there could be obtained a room temperature-curable organopolysiloxane composition capable of yielding a silicone rubber cured product expressing an adhesiveness and water-immersion adhesiveness to general purpose resins (acrylic (AC) resin, polybutylene terephthalate (PBT) resin, polycarbonate (PC) resin and acrylonitrile-butadiene-styrene (ABS) resin) and metals (aluminum, copper and stainless steel); and that the aforementioned conventional problems could be solved by such composition.

Specifically, the present invention is to provide the following room temperature-curable organopolysiloxane composition and various goods employing a cured product (silicone rubber) of such composition.
[1] A room temperature-curable organopolysiloxane composition comprising
   (A) 100 parts by mass of a diorganopolysiloxane having silicon atom-bonded hydroxyl groups and/or hydrolyzable groups at both terminals of a molecular chain, and exhibiting a viscosity of 20 to 1,000,000 mPa·s at 25°C,
   (B) a hydrolyzable silane compound and/or a partial hydrolysis condensate thereof, having at least three silicon atom-bonded hydrolyzable groups in one molecule, the component (B) being other than the component (A) and in an amount of 0.1 to 40 parts by mass per 100 parts by mass of the component (A) and
   (C) a hydrolyzable silane compound and/or a partial hydrolysis condensate thereof, having in one molecule a hydrolyzable group(s) and two nitrogen atoms of which one nitrogen atom is bonded to a silicon atom through a divalent hydrocarbon group having at least five carbon atoms, the component (C) being other than the components (A) and (B) and in an amount of 0.001 to 10 parts by mass per 100 parts by mass of the component (A).
[2] The room temperature-curable organopolysiloxane composition according to [1], wherein the component (C) comprises a silane compound represented by the following general formula (3); and/or a partial hydrolysis condensate thereof

   (R'O)_{3-c}R³_{c}Si-Z¹-NH-Z²-NH₂ (3)

   wherein c represents an integer of 0 to 2, R'O represents a hydrolyzable group, R³ represents a substituted or unsubstituted monovalent hydrocarbon group, Z¹ represents a substituted or unsubstituted divalent hydrocarbon group having at least five carbon atoms, and Z² represents a substituted or unsubstituted divalent hydrocarbon group.
[3] The room temperature-curable organopolysiloxane composition according to [2], wherein Z¹ in the general formula (3) of the component (C) represents a divalent hydrocarbon group expressed by C_{d}H_{2d} wherein d is an integer of 5 to 13.
[4] The room temperature-curable organopolysiloxane composition according to any one of [1] to [3], wherein the component (C) comprises a silane compound represented by the following general formula (4); and/or a partial hydrolysis condensate thereof

   (R'O)_{3-c}R³_{c}Si-C₈H₁₆-NH-C₂H₄-NH₂ (4)

   wherein c represents an integer of 0 to 2, R'O represents a hydrolyzable group, and R³ represents a substituted or unsubstituted monovalent hydrocarbon group.
[5] An automobile part or automobile oil seal having a cured product of the room temperature-curable organopolysiloxane composition as set forth in any one of [1] to [4].
[6] An electric part or electronic part having a cured product of the room temperature-curable organopolysiloxane composition as set forth in any one of [1] to [4].
[7] An architectural structure or civil engineering structure having a cured product of the room temperature-curable organopolysiloxane composition as set forth in any one of [1] to [4].
[8] An adhesive agent, sealing material, potting agent or coating agent containing the room temperature-curable organopolysiloxane composition as set forth in any one of [1] to [4].

### Effects of the invention

The room temperature-curable organopolysiloxane composition of the invention is capable of yielding a silicone rubber cured product (elastomer-type organopolysiloxane cured product) exhibiting a favorable adhesiveness and water-immersion adhesiveness to general purpose resins (acrylic (AC) resin, polybutylene terephthalate (PBT) resin, polycarbonate (PC) resin and acrylonitrile-butadiene-styrene (ABS) resin) and metals (aluminum, copper and stainless steel).

### MODE FOR CARRYING OUT THE INVENTION

The present invention is described in detail hereunder. Except otherwise noted, a "room temperature" or an "ordinary temperature" usually refers to a state of temperature 23°C ± 10°C, humidity 50%RH ± 10%RH; particularly, a state of temperature 23°C ± 5°C, humidity 50%RH ± 5%RH.

### Component (A)

A component (A) is a diorganopolysiloxane having silicon atom-bonded hydroxyl groups (i.e. silanol groups) and/or hydrolyzable groups at both of its molecular chain terminals, and serves as a main agent (base polymer) of the organopolysiloxane composition of the invention. There are no particular restrictions on the molecular structure of such diorganopolysiloxane, and the diorganopolysiloxane may have any one of a linear structure, a branched structure and a linear structure with branched moieties. It is preferred that the diorganopolysiloxane be a linear diorganopolysiloxane whose main chain is basically composed of repeating diorganosiloxane units, and whose molecular chain terminals are both blocked by silicon atom-bonded hydroxyl groups (silanol groups) and/or hydrolyzable silyl groups (e.g. diorganohydroxysilyl groups and/or triorganosilyl groups each having 1 to 3 hydrolyzable groups (e.g. diorganoalkoxysilyl groups, organodialkoxysilyl groups and trialkoxysilyl groups)). Such linear diorganopolysiloxane may also have a few branched moieties. Further, such diorganopolysiloxane may also have, for example, a silalkylene structure (-Si R Si-) in its molecular chain (e.g. particularly, at bonding sections between the silanol groups and/or the hydrolyzable silyl groups at the two molecular chain terminals and the repeating structure of the diorganosiloxane units that composes the main chain.) In the above formula, R represents a divalent hydrocarbon group having 1 to 20 carbon atoms, preferably 2 to 6 carbon atoms (e.g. linear or branched alkylene group). In addition, a part of or all the hydrogen atoms bonded to carbon atoms may be substituted by halogen atoms or cyano groups.

A viscosity of the diorganopolysiloxane as the component (A) at 25°C is 20 to 1,000,000 mPa·s, preferably 100 to 300,000 mPa·s, more preferably 1,000 to 200,000 mPa·s, and particularly preferably 10,000 to 100,000 mPa·s. When the viscosity of the diorganopolysiloxane is lower than the lower limit value (20 mPa·s), a large amount of a later-described component (B) will be required, which will then lead to an economic disadvantage. Further, it is not preferable when the viscosity of the diorganopolysiloxane is greater than the upper limit value (1,000,000 mPa·s), because a workability will be impaired.

Here, the viscosity is measured by, for example, a rotary viscometer (e.g. BL type, BH type, BS type, cone plate type and rheometer).

The hydrolyzable groups contained in the diorganopolysiloxane as the component (A) are preferably alkoxy groups or alkoxy-substituted alkoxy groups. There are no particular restrictions on the numbers of such hydroxyl groups (silanol groups) and hydrolyzable groups that are present at each terminal of the diorganopolysiloxane. Preferably, when having hydroxyl groups (silanol groups) at the terminals, it is favorable that one silicon atom-bonded hydroxyl group (i.e. hydroxysilyl group or silanol group) exists at each of the two molecular chain terminals. Further, when having alkoxy groups or alkoxy-substituted alkoxy groups as hydrolyzable groups at the terminals, it is preferred that two or three silicon atom-bonded alkoxy groups (i.e. alkoxysilyl groups) or silicon atom-bonded alkoxy-substituted alkoxy groups (i.e. alkoxyalkoxysilyl groups) exist at each of the two molecular chain terminals (e.g. exist as dialkoxyorganosilyl groups or bis (alkoxyalkoxy) organosilyl groups; or as trialkoxysilyl groups or tris (alkoxyalkoxy) silyl groups).

It is preferred that the above alkoxy groups be those each having 1 to 10 carbon atoms, particularly preferably 1 to 4 carbon atoms, examples of which include a methoxy group, an ethoxy group, a propoxy group, an isopropoxy group, a butoxy group, an isobutoxy group, a tert-butoxy group, a hexyloxy group and an octyloxy group.

It is preferred that the above alkoxy-substituted alkoxy groups be those each having 2 to 10 carbon atoms in total, particularly preferably 3 or 4 carbon atoms in total, examples of which include a methoxymethoxy group, a methoxyethoxy group and an ethoxymethoxy group.

Particularly, it is preferred that the diorganopolysiloxane have hydroxyl groups (silanol groups), methoxy groups or ethoxy groups at both terminals.

As an organic group other than a hydroxyl group and hydrolyzable group that may be bonded to silicon atom, there may be listed a substituted or unsubstituted monovalent hydrocarbon group having 1 to 18 carbon atoms, preferably 1 to 10 carbon atoms. Examples of such monovalent hydrocarbon group include an alkyl group such as a methyl group, an ethyl group, a propyl group, an isopropyl group, a butyl group, an isobutyl group, a tert-butyl group, a hexyl group, a heptyl group, an octyl group and a 2-ethylhexyl group; a cycloalkyl group such as a cyclopentyl group and a cyclohexyl group; an alkenyl group such as a vinyl group and an allyl group; an aryl group such as a phenyl group, a tolyl group and a naphthyl group; an aralkyl group such as a benzyl group, a phenylethyl group and a phenylpropyl group; groups obtained by substituting a part of or all the hydrogen atoms bonded to the carbon atoms in these groups with cyano groups or halogen atoms such as fluorine atoms, bromine atoms and chlorine atoms, examples of such substituted group including halogenated monovalent hydrocarbon groups such as trifluoropropyl group and chloropropyl group; and a cyanoalkyl group such as β-cyanoethyl group and γ-cyanopropyl group. Among these examples, a methyl group is preferred.

It is particularly preferred that the diorganopolysiloxane (A) be a compound represented by the following general formula (1).

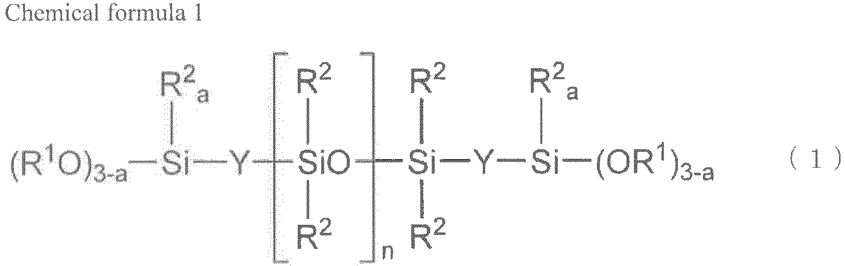

In the above formula (1), each R¹ independently represents a group selected from a hydrogen atom; an alkyl group having 1 to 10 carbon atoms, such as a methyl group, an ethyl group, a propyl group, a butyl group and an octyl group; and an alkoxyalkyl group having 2 to 10 carbon atoms, such as a methoxymethyl group, a methoxyethyl group and an ethoxymethyl group. It is preferred that R¹ be a hydrogen atom, a methyl group or an ethyl group. Each R² independently represents a substituted or unsubstituted monovalent hydrocarbon group having 1 to 18 carbon atoms, preferably 1 to 10 carbon atoms. Examples of such monovalent hydrocarbon group include the aforementioned organic groups other than a hydroxyl group and hydrolyzable group, and it is preferred that the monovalent hydrocarbon group be a methyl group. a represents 0, 1 or 2. It is particularly preferred that a represent 0 or 1 when R¹ is an alkyl group or an alkoxyalkyl group, and that a represent 2 when R¹ is a hydrogen atom. n (or polymerization degree) represents a number at which the viscosity of the diorganopolysiloxane at 25°C becomes 20 to 1,000,000 mPa·s, preferably 100 to 300,000 mPa·s, more preferably 1,000 to 200,000 mPa·s, and particularly preferably 10,000 to 100,000 mPa·s. These viscosities are usually exhibited when the value of n (or polymerization degree) is about 10 to 3,000, preferably about 40 to 2,000, more preferably about 150 to 1,500, and even more preferably about 200 to 1,000. Here, a polymerization degree (or molecular weight) can normally be obtained as, for example, a mass average polymerization degree (or mass average molecular weight) in terms of polystyrene, measured by a gel permeation chromatography analysis using toluene or the like as a developing solvent.

In the above formula (1), each Y independently represents an oxygen atom; a substituted or unsubstituted divalent hydrocarbon group having 1 to 20 carbon atoms, preferably 1 to 6 carbon atoms; or a group represented by the following general formula (2).

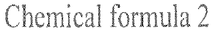

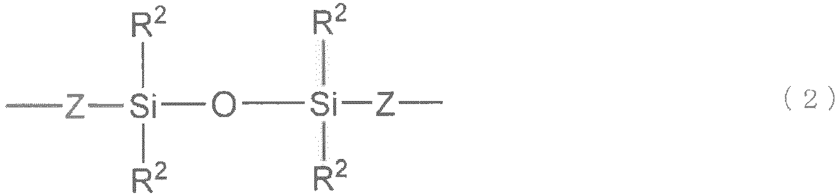

In the formula (2), R² is defined as in the above formula (1), and Z represents a substituted or unsubstituted divalent hydrocarbon group having 1 to 20 carbon atoms, preferably 1 to 6 carbon atoms. While the above divalent hydrocarbon groups (Y or Z) may each have a linear or branched structure (e.g methylethylene group), particularly preferred are linear alkylene groups such as a methylene group, an ethylene group, a propylene group (trimethylene group), a butylene group (tetramethylene group) and a hexylene group (hexamethylene group). Here, an ethylene group is especially preferred.

It is particularly preferred that Y be an oxygen atom.

The diorganopolysiloxane as the component (A) may be produced by a known method. One kind of such diorganopolysiloxane may be used alone, or two or more kinds thereof may be used in combination. Particularly, it is preferred that the diorganopolysiloxane having hydroxysilyl groups at both of its molecular chain terminals (i.e. diorganopolysiloxane whose R¹s at both terminals are hydrogen atoms in the formula (1)) be contained by an amount of 10 to 100 parts by mass, more preferably 50 to 100 parts by mass, per 100 parts by mass of the component (A).

It is preferred that the component (A) be contained by an amount of 99 to 20% by mass, particularly preferably 95 to 50% by mass, in the room temperature-curable organopolysiloxane composition of the invention.

### Component (B)

A component (B) is a hydrolyzable organosilane compound and/or its partial hydrolysis condensate (i.e. a siloxane compound such as a siloxane oligomer having at least three residual hydrolyzable groups), having at least three silicon atom-bonded hydrolyzable groups in one molecule. The component (B) serves as a cross-linking agent (curing agent) for forming a cross-linked structure as the at least three hydrolyzable groups in the molecule react with the terminal silanol groups and/or hydrolyzable silyl groups in the component (A) through hydrolysis and condensation reactions. However, in the present invention, the component (B) is a compound different from the component (A) and a later-described component (C). Particularly, the component (B) is differentiated from the component (A) by the fact that the component (B) essentially does not contain in its molecule the repeating structure of the bifunctional diorganosiloxane units; and is clearly differentiated from the later-described component (C) by the fact that the component (B) does not contain in its molecule nitrogen atoms that are bonded to silicon atoms through divalent hydrocarbon groups each having at least five carbon atoms.

As hydrolyzable groups contained in the hydrolyzable organosilane compound or organosiloxane (e.g. partial hydrolysis condensate) as the component (B), there may be listed an alkoxy group, an alkoxy-substituted alkoxy group, an acyloxy group, an alkenoxy group, a ketoxime group, an aminoxy group and an amide group, each having 1 to 10 carbon atoms in total. Examples thereof include an alkoxy group such as a methoxy group, an ethoxy group and a propoxy group; an alkoxy-substituted alkoxy group such as a methoxyethoxy group, an ethoxyethoxy group and a methoxypropoxy group; an acyloxy group such as an acetoxy group and an octanoyloxy group; an alkenoxy group such as a vinyloxy group, an isopropenoxy group and a 1-ethyl-2-methylvinyloxy group; a ketoxime group such as a dimethylketoxime group, a methylethylketoxime group and a methylisobutylketoxime group; an aminoxy group such as a dimethylaminoxy group and a diethylaminoxy group; and an amide group such as an N-methylacetamide group and an N-ethylacetamide group.

As an organic group other than the above hydrolyzable groups that may be bonded to silicon atoms, there may be listed a substituted or unsubstituted monovalent hydrocarbon group having 1 to 18 carbon atoms, preferably 1 to 10 carbon atoms. Examples of such monovalent hydrocarbon group include an alkyl group such as a methyl group, an ethyl group, a propyl group, an isopropyl group, a butyl group, an isobutyl group, a tert-butyl group, a hexyl group, a heptyl group, an octyl group, a 2-ethylhexyl group, a nonyl group, a decyl group and an octadecyl group; a cycloalkyl group such as a cyclopentyl group and a cyclohexyl group; an alkenyl group such as a vinyl group and an allyl group; an aryl group such as a phenyl group, a tolyl group, a xylyl group and a naphthyl group; an aralkyl group such as a benzyl group, a phenethyl group and a phenylpropyl group; and groups obtained by substituting a part of or all the hydrogen atoms bonded to the carbon atoms in these groups with cyano groups or halogen atoms such as fluorine atoms, bromine atoms and chlorine atoms, examples of such substituted group including halogenated alkyl groups such as a 3-chloropropyl group and a 3,3,3-trifluoropropyl group. Among these examples, as the substituted or unsubstituted monovalent hydrocarbon group, preferred are a methyl group, an ethyl group, a propyl group, a vinyl group and a phenyl group.

Examples of the silane compound as the component (B) include alkoxysilanes such as methyltrimethoxysilane, ethyltrimethoxysilane, decyltrimethoxysilane, vinyltrimethoxysilane, phenyltrimethoxysilane, methyltriethoxysilane, ethyltriethoxysilane, vinyltriethoxysilane, phenyltriethoxysilane, tetramethoxysilane and tetraethoxysilane; ketoximesilanes such as methyltris (dimethylketoxime) silane, methyltris (methylethylketoxime) silane, ethyltris (methylethylketoxime) silane, methyltris (methylisobutylketoxime) silane and vinyltris (methylethylketoxime) silane; alkoxy-substituted alkoxysilanes such as methyltri (methoxymethoxy) silane, ethyltri (methoxymethoxy) silane, vinyltri (methoxymethoxy) silane, phenyltri (methoxymethoxy) silane, methyltri (ethoxymethoxy) silane, ethyltri (ethoxymethoxy) silane, vinyltri (ethoxymethoxy) silane, phenyltri (ethoxymethoxy) silane, tetra (methoxymethoxy) silane and tetra (ethoxymethoxy) silane; aminoxysilanes such as methyltris (N, N-diethylaminoxy) silane; amidesilanes such as methyltris (N-methylacetamide) silane, methyltris (N-butylacetamide) silane and methyltris (N-cyclohexylacetamide) silane; alkenoxysilanes such as methyltriisopropenoxysilane, vinyltriisopropenoxysilane and phenyltriisopropenoxysilane; and acetoxysilanes such as methyltriacetoxysilane and vinyltriacetoxysilane.

The siloxane compound as the component (B) may be a partial hydrolysis condensate of any of the above silane compounds. While there are no particular restrictions on the mass average molecular weight (or mass average polymerization degree) of such siloxane, it is preferred that the siloxane compound as the component (B) be an oligomer with 2 to 100, preferably 2 to 20 of the aforementioned silane compounds being polymerized. Such siloxane may also be a mixture of oligomers with various polymerization degrees.

One kind of the component (B) may be used alone, or two or more kinds thereof may be used in combination. In addition, there may also be used together a silane compound and/or siloxane having two hydrolyzable groups in one molecule, without impairing the effects of the invention.

The component (B) is in an amount of 0.1 to 40 parts by mass, preferably 1 to 20 parts by mass, per 100 parts by mass of the component (A). When the amount of the component (B) is smaller than the lower limit value (0.1 parts by mass), curability and storability may be impaired. Further, when the amount of the component (B) is greater than the upper limit value (40 parts by mass), not only a price disadvantage will be incurred, but the elongation of a cured product may decrease, and the durability thereof may be impaired as well. Particularly, when the component (A) contains the diorganopolysiloxane having hydroxyl groups at its terminals, it is preferred that the component (B) be added in an amount at which the number of the hydrolyzable groups in the component (B) surpasses the number of the hydroxyl groups in the component (A).

### Component (C)

A component (C) is a hydrolyzable silane compound and/or its partial hydrolysis condensate (a siloxane compound such as a siloxane oligomer) other than the components (A) and (B). The component (C) has in one molecule a hydrolyzable group(s) and two nitrogen atoms, and one of these two nitrogen atoms is bonded to a silicon atom through a divalent hydrocarbon group having at least five carbon atoms. The two nitrogen atoms in the component (C) usually exist in non-terminal segment or at the terminal of an identical monovalent organic group (substituted monovalent hydrocarbon group) that is bonded to a silicon atom. Here, the nitrogen atom closer to the silicon atom is bonded to the silicon atom through the divalent hydrocarbon group having at least five carbon atoms.

The component (C) is a critical component in terms of allowing a cured product (silicone rubber) of the room temperature-curable organopolysiloxane composition of the invention to exhibit a superior (initial) adhesiveness and water-immersion adhesiveness to various kinds of substrates (particularly, substrates with poor adhesiveness). It is assumed that the component (C) considerably contributes to the favorable adhesiveness and water-immersion adhesiveness of the cured room temperature-curable organopolysiloxane composition of the invention to general purpose resins (acrylic (AC) resin, polybutylene terephthalate (PBT) resin, polycarbonate (PC) resin and acrylonitrile-butadiene-styrene (ABS) resin) and metals (aluminum, copper and stainless steel). The reason thereof is speculated as follows. That is, since one of the two nitrogen atoms in the molecule is bonded to the silicon atom through the divalent hydrocarbon group having at least five carbon atoms, a long-chain alkyl spacer thus exists between the nitrogen atom in the molecule and the silicon atom in the hydrolyzable silyl group, thereby allowing the component (C) to be strongly bonded to the above general purpose resins and metals. Therefore, as an adhesion improvement agent (adhesion accelerator), the component (C) is a critical component of the invention.

As for the component (C), it is preferred that the two nitrogen atoms in the molecule be bonded to each other through a substituted or unsubstituted divalent hydrocarbon group (e.g. linear or branched alkylene group).

Further, it is more preferred that the component (C) be a hydrolyzable silane compound represented by the following general formula (3), especially a hydrolyzable silane compound represented by the following general formula (4).

(R'O)_{3-c}R³_{c}Si-Z¹-NH-Z²-NH₂ (3)

(R'O)_{3-c}R³_{c}Si-C₈H₁₆-NH-C₂H₄-NH₂ (4)

In the above formulae (3) and (4), R'O represents a hydrolyzable group, examples of which include an alkoxy group, an alkoxy-substituted alkoxy group, an acyloxy group, an alkenoxy group, a ketoxime group, an aminoxy group and an amide group each having 1 to 10, preferably 1 to 6, more preferably 1 to 4 carbon atoms in total. Specific examples of R'O include an alkoxy group such as a methoxy group, an ethoxy group, a propoxy group, an isopropoxy group, a butoxy group, an isobutoxy group and a tert-butoxy group; an alkoxy-substituted alkoxy group such as a methoxyethoxy group, an ethoxyethoxy group and a methoxypropoxy group; an acyloxy group such as an acetoxy group and an octanoyloxy group; an alkenoxy group such as a vinyloxy group, an allyloxy group, a propenoxy group, an isopropenoxy group and a 1-ethyl-2-methylvinyloxy group; and a ketoxime group such as a dimethylketoxime group, a methylethylketoxime group and a methylisobutylketoxime group. Among the above examples, an alkoxy group and a ketoxime group are preferred; an alkoxy group is more preferred; and a methoxy group or an ethoxy group is particularly preferred.

In the above formulae (3) and (4), R³ may be a substituted or unsubstituted monovalent hydrocarbon group having 1 to 18, preferably 1 to 10, more preferably 1 to 6 carbon atoms. Examples of such monovalent hydrocarbon group include an alkyl group such as a methyl group, an ethyl group, a propyl group, an isopropyl group, a butyl group, an isobutyl group, a tert-butyl group, a hexyl group, a heptyl group, an octyl group, a 2-ethylhexyl group, a nonyl group, a decyl group and an octadecyl group; a cycloalkyl group such as a cyclopentyl group and a cyclohexyl group; an alkenyl group such as a vinyl group and an allyl group; an aryl group such as a phenyl group, a tolyl group, a xylyl group and a naphthyl group; an aralkyl group such as a benzyl group, a phenethyl group and a phenylpropyl group; and groups obtained by substituting a part of or all the hydrogen atoms bonded to the carbon atoms in these groups with cyano groups or halogen atoms such as fluorine atoms, bromine atoms and chlorine atoms, examples of such substituted group including halogenated alkyl groups such as a 3-chloropropyl group and a 3,3,3-trifluoropropyl group. Among these examples, as the substituted or unsubstituted monovalent hydrocarbon group, preferred are a methyl group, an ethyl group, a propyl group, a vinyl group and a phenyl group. Here, c represents an integer of 0 to 2, among which 0 or 1 is preferred.

In the above formula (3), Z¹ represents a substituted or unsubstituted divalent hydrocarbon group having not less than five carbon atoms, particularly 5 to 13 carbon atoms. Although such divalent hydrocarbon group may either have a linear or branched structure, it is preferred that this divalent hydrocarbon group be an alkylene group, and a group that is represented by C_{d}H2_{d} (d is an integer of 5 to 13). It is particularly preferred that this divalent hydrocarbon group be a linear alkylene group such as a pentylene group (pentamethylene group), a hexylene group (hexamethylene group), a heptylene group (heptamethylene group), an octylene group (octamethylene group), a nonylene group (nonamethylene group), a decylene group (decamethylene group), a undecylene group (undecamethylene group), dodecylene group (dodecamethylene group) and a tridecylene group (tridecamethylene). Among these groups, preferred are octylene group, nonylene group, decylene group and undecylene group.

In the above formula (3), Z² represents a substituted or unsubstituted divalent hydrocarbon group having 1 to 20, preferably 1 to 6, more preferably 2 to 4 carbon atoms. Although such divalent hydrocarbon group may either have a linear or branched structure, it is preferred that this divalent hydrocarbon group be an alkylene group, particularly preferably a methylene group, an ethylene group, a propylene group (trimethylene group), a butylene group (tetramethylene group) or a hexylene group (hexamethylene group). Among these groups, preferred are an ethylene group, a propylene group (trimethylene group) and a butylene group (tetramethylene group).

The component (C) is in an amount of 0.001 to 10 parts by mass, preferably 0.01 to 7 parts by mass, more preferably 0.05 to 5 parts by mass, and most preferably 0.2 to 2 parts by mass, per 100 parts by mass of the component (A). When the amount of the component (C) is smaller than the above lower limit (0.001 parts by mass), there cannot be achieved a desired adhesiveness. Further, when the amount of the component (C) is greater than the above upper limit (10 parts by mass), not only a price disadvantage will be incurred, but the elongation, water resistance or durability of the composition may be impaired as well.

Examples of the silane compound as the component (C), as that represented by the above formula (3), include:
N-2-(aminoethyl)-5-aminopentyltrimethoxysilane;
N-2-(aminoethyl)-6-aminohexyltrimethoxysilane;
N-2-(aminoethyl)-7-aminoheptyltrimethoxysilane;
N-2-(aminoethyl)-8-aminooctyltrimethoxysilane;
N-2-(aminoethyl)-9-aminononyltrimethoxysilane;
N-2-(aminoethyl)-10-aminodecyltrimethoxysilane;
N-2-(aminoethyl)-11-aminoundecyltrimethoxysilane;
N-2-(aminoethyl)-12-aminododecyltrimethoxysilane;
N-2-(aminoethyl)-13-aminotridecyltrimethoxysilane;
N-2-(aminopropyl)-8-aminooctyltrimethoxysilane;
N-2-(aminobutyl)-8-aminooctyltrimethoxysilane; and
compounds obtained by substituting the methoxy groups in each of the above listed silane compounds all with ethoxy groups.

### Component (D)

It is preferred that a curing catalyst as a component (D) be further added to the composition of the invention if necessary. A condensation catalyst is preferable as such as curing catalyst. For example, there may be employed a condensation catalyst that has been conventionally and commonly used as a curing accelerator for a room temperature-curable organopolysiloxane composition. Examples of such condensation catalyst include organic tin compounds such as dibutyltin methoxide, dibutyltin diacetate, dibutyltin dioctate, dibutyltin dilaurate, dioctyltin dilaurate, dioctyltin dioctate, dimethyltin dimethoxide and dimethyltin diacetate; organic titanium compounds such as tetrapropyl titanate, tetrabutyl titanate, tetra-2-ethylhexyl titanate and dimethoxytitanium diacetylacetonato; amine compounds such as hexylamine, 3-aminopropyltrimethoxysilane and tetramethylguanidylpropyltrimethoxysilane; and salts of these compounds. Each of these condensation catalysts may be used singularly, or two or more of them may be used in combination.

If adding the component (D), it is added in an amount of 0.001 to 20 parts by mass, preferably 0.005 to 5 parts by mass, more preferably 0.01 to 2 parts by mass, per 100 parts by mass of the component (A). When the amount of the component (D) is smaller than the above lower limit, there may not be achieved a catalyst effect. Further, when the amount of the component (D) is greater than the above upper limit, not only a price disadvantage will be incurred, but the durability or adhesiveness of the composition may be impaired as well.

### Other components

Moreover, on the premise that the effects of the invention will not be inhibited, in addition to the components (A) to (D), there may be further contained, as optional components, additives that are generally known for use in resin compositions (particularly, silicone rubber composition). Examples of such additives include silica-based fillers such as a dry silica (aerosol silica or fumed silica), a wet silica (precipitated silica), a sol-gel silica, a colloidal silica, a molten silica (spherical silica) and a crystalline silica (quartz fine powder); a colloidal calcium carbonate; a heavy (or crushed) calcium carbonate; a quartz fine powder; a diatom earth powder; an aluminum hydroxide powder; a fine particle-type alumina; a magnesia powder; a zinc oxide powder; fine powder-type inorganic fillers obtained by surface treating the aforementioned additives with, for example, silanes, silazanes or polysiloxanes having low polymerization degrees; coloring agents such as a pigment, a dye and a fluorescent whitener; an antibacterial agent; a fungicide; and a plasticizer.

The silicone rubber cured product obtained by curing the room temperature-curable organopolysiloxane composition of the invention, is superior in adhesiveness and water-immersion adhesiveness to general purpose resins (acrylic (AC) resin, polybutylene terephthalate (PBT) resin, polycarbonate (PC) resin and acrylonitrile-butadiene-styrene (ABS) resin) and metals (aluminum, copper and stainless steel). Therefore, the room temperature-curable organopolysiloxane composition of the invention is useful as, for example, an adhesive agent, a sealing material, a potting agent or a coating agent. The organopolysiloxane composition of the invention may be used as an adhesive agent, a sealing material, a potting agent or a coating agent in accordance with a conventional method. Examples of target objects include automobile parts, automobile oil seals, electric/electronic parts, electric wires/cables, architectural structures and civil engineering structures.

### Working example

The present invention is described in greater detail hereunder with reference to working and comparative examples. However, the present invention is not limited to the following working examples. Here, the expression "part(s)" in each working example refers to "part(s) by mass." Further, viscosity refers to a value measured at 25°C, using a rotary viscometer manufactured in accordance with a method described in JIS Z 8803.

### Component (A)

(A-1)
   Hydroxydimethylsiloxy group end-capped polydimethylsiloxane having a silicon atom-bonded hydroxyl group (silanol group) at each of its two molecular chain terminals (by Shin-Etsu Chemical Co., Ltd.; viscosity 50,000 mPa·s)

### Component (B)

(B-1) Methyltrimethoxysilane
(B-2) Methyltris (methylethylketoxime) silane
(B-3) Vinyltriisopropenoxysilane

### Component (C)

(C-1) N-2-(aminoethyl)-5-aminopentyltrimethoxysilane
(C-2) N-2-(aminoethyl)-8-aminooctyltrimethoxysilane (by Shin-Etsu Chemical Co., Ltd.)
(C-3) N-2-(aminoethyl)-11-aminoundecyltrimethoxysilane
(C-4) N-2-(aminoethyl)-3-aminopropyltrimethoxysilane (by Shin-Etsu Chemical Co., Ltd.)
(C-5) 3-aminopropyltriethoxysilane (by Shin-Etsu Chemical Co., Ltd.)

(C-1) was synthesized by a dehydrohalogenation reaction between ethylenediamine and 5-bromopentyltrimethoxysilane; (C-3) was synthesized by a dehydrohalogenation reaction between ethylenediamine and 11-bromoundecyltrimethoxysilane. Here, the reactions may be performed under known conditions for reaction. Specifically, the reactants can be obtained by performing heating and stirring.

Component (D)
(D-1) Dioctyltin dilaurate

### Other components

(E-1) Aerosol silica (MU-215 by Shin-Etsu Chemical Co., Ltd.; surface-hydrophobized product treated with dimethyldichlorosilane; BET specific surface area 120 m²/g; water amount 0.5% by mass)

### Working example 1

Homogenously mixed were 100 parts of the hydroxydimethylsiloxy group end-capped polydimethylsiloxane (A-1) having a silicon atom-bonded hydroxyl group (silanol group) at each of its two molecular chain terminals; and 10 parts of the aerosol silica (E), followed by sequentially adding thereto 5 parts of (B-1), 1 part of (C-1) and 0.1 parts of (D-1), and then homogenously mixing the same, thus obtaining the room temperature-curable organopolysiloxane composition. Here, mixing was performed using a universal mixer.

### Working examples 2 to 12

A room temperature-curable organopolysiloxane composition was obtained in the similar manner as working example 1, and at the composition ratios shown in Table 1.

### Comparative examples 1 to 9

A room temperature-curable organopolysiloxane composition was obtained in the similar manner as working example 1, and at the composition ratios shown in Table 2.

### Adhesion test

An adhesiveness of each composition obtained was evaluated by the following method.

Each composition was applied to an adherend in a way such that the composition applied would have a thickness of about 2 mm, and such adherend was then left under room temperature in a static manner for seven days. Later, a simple adhesion test was performed through hand pulling.

Moreover, a similar simple adhesion test was also performed after leaving the above adherend under room temperature in a static manner for seven days and then keeping the same immersed in a water of 40°C for another seven days.

Those that had exhibited cohesive failures as a destruction state were evaluated as "favorable (o)," whereas those that had exhibited adhesive failures (interfacial peeling at adhesive surface) were evaluated as "unfavorable (x)."

Adherends used for evaluation were an acrylic (AC) resin, a polybutylene terephthalate (PBT) resin, a polycarbonate (PC) resin, an acrylonitrile-butadiene-styrene (ABS) resin, aluminum (Al), copper (Cu) and stainless steel (SUS).

The results thereof are shown in Table 1 and Table 2. However, since the curing agent B-2 corrodes copper, adhesion test was not performed on copper.

**Table 1**

| | | | | Working example | | | | | | | | | | | |
|---|---|---|---|---|---|---|---|---|---|---|---|---|---|---|---|
| | | | | 1 | 2 | 3 | 4 | 5 | 6 | 7 | 8 | 9 | 10 | 11 | 12 |
| A | A-1 | Polydimethylsiloxane | | 100 | 100 | 100 | 100 | 100 | 100 | 100 | 100 | 100 | 100 | 100 | 100 |
| E | E-1 | Aerosol silica | | 10 | 10 | 10 | 10 | 10 | 10 | 10 | 10 | 10 | 10 | 10 | 10 |
| B | B-1 | Methyltrimethoxysilane | | 5 | 5 | 5 | 0.5 | 5 | | | | | | | |
| | B-2 | Methyltris (methylethylketoxime) silane | | | | | | | 5 | 5 | 5 | 20 | | | |
| | B-3 | Vinyltriisopropenoxysilane | | | | | | | | | | | 5 | 5 | 5 |
| C | C-1 | N-2-(aminoethyl)-5-aminopentyltrimethoxysilane | | 1 | | | 1 | 0.1 | 1 | | | 10 | 1 | | |
| | C-2 | N-2-(aminoethyl)-8-aminooctyltrimethoxysilane | | | 1 | | | | | 1 | | | | 1 | |
| | C-3 | N-24aminoethylyl)-aminoundecyltrimethoxysilane | | | | 1 | | | | | 1 | | | | 1 |
| D | D-1 | Dioctyltin dilaurate | | 0.1 | 0.1 | 0.1 | 0.1 | 0.1 | 0.1 | 0.1 | 0.1 | 0.1 | 0.1 | 0.1 | 0.1 |
| Adhesion evaluation result (Kept at room temperature for 7 days) | | | AC | ○ | ○ | ○ | ○ | ○ | ○ | ○ | ○ | ○ | ○ | ○ | ○ |
| | | | PBT | ○ | ○ | ○ | ○ | ○ | ○ | ○ | ○ | ○ | ○ | ○ | ○ |
| | | | PC | × | ○ | ○ | ○ | ○ | ○ | ○ | ○ | ○ | ○ | ○ | ○ |
| | | | ABS | ○ | ○ | ○ | ○ | ○ | ○ | ○ | ○ | ○ | ○ | ○ | ○ |
| | | | Al | ○ | ○ | ○ | ○ | ○ | ○ | ○ | ○ | ○ | ○ | ○ | ○ |
| | | | Cu | ○ | ○ | ○ | ○ | ○ | - | - | - | - | ○ | ○ | ○ |
| | | | SUS | ○ | ○ | ○ | ○ | ○ | ○ | ○ | ○ | ○ | ○ | ○ | ○ |
| Adhesion evaluation result (Immersed in water of 40 °C for 7 days) | | | AC | ○ | ○ | ○ | ○ | ○ | ○ | ○ | ○ | ○ | ○ | ○ | ○ |
| | | | PBT | ○ | ○ | ○ | ○ | ○ | ○ | ○ | ○ | ○ | ○ | ○ | ○ |
| | | | PC | × | ○ | ○ | ○ | ○ | ○ | ○ | ○ | ○ | ○ | ○ | ○ |
| | | | ABS | ○ | ○ | ○ | ○ | ○ | ○ | ○ | ○ | ○ | ○ | ○ | ○ |
| | | | Al | ○ | ○ | ○ | ○ | ○ | ○ | ○ | ○ | ○ | ○ | ○ | ○ |
| | | | Cu | ○ | ○ | ○ | ○ | ○ | - | - | - | - | ○ | ○ | ○ |
| | | | SUS | ○ | ○ | ○ | ○ | ○ | ○ | ○ | ○ | ○ | ○ | ○ | ○ |

**Table 2**

| | | | | Comparative example | | | | | | | | |
|---|---|---|---|---|---|---|---|---|---|---|---|---|
| | | | | 1 | 2 | 3 | 4 | 5 | 6 | 7 | 8 | 9 |
| A | A - 1 | Polydimethylsiloxane | | 100 | 100 | 100 | 100 | 100 | 100 | 100 | 100 | 100 |
| E | E - 1 | Aerosol silica | | 10 | 10 | 10 | 10 | 10 | 10 | 10 | 10 | 10 |
| B | B - 1 | Methyltrimethaxysilane | | 5 | 5 | 5 | 0.5 | | | | | |
| | B - 2 | Methyltris (methylethylketoxime) silane | | | | | | 5 | 5 | 20 | | |
| | B - 3 | Vinyltriisopropenoxysilane | | | | | | | | | 5 | 5 |
| C | C - 4 | N-2-(aminoethyl)-3-aminopropyltrimethoxysilane | | 1 | | 0.1 | 1 | 1 | | 10 | 1 | |
| | C - 5 | 3-aminopropyltriethoxysilane | | | 1 | | | | 1 | | | 1 |
| D | D - 1 | Dioctyltin dilaurate | | 0.1 | 0.1 | 0.1 | 0.1 | 0.1 | 0.1 | 0.1 | 0.1 | 0.1 |
| Adhesion evaluation result (Kept at room temperature for 7 days) | | | AC | ○ | × | ○ | ○ | × | × | ○ | × | × |
| | | | PBT | × | × | × | × | × | × | ○ | × | × |
| | | | PC | × | × | × | × | × | × | × | ○ | ○ |
| | | | ABS | × | × | × | × | × | × | × | ○ | ○ |
| | | | Al | ○ | ○ | ○ | ○ | ○ | ○ | ○ | ○ | ○ |
| | | | Cu | ○ | ○ | ○ | ○ | - | - | - | × | × |
| | | | SUS | ○ | ○ | × | ○ | ○ | ○ | ○ | × | × |
| Adhesion evaluation result (Immersed In water of 4O°C for 7 days) | | | AC | × | × | × | × | × | × | × | × | × |
| | | | PBT | × | × | × | × | × | × | × | × | × |
| | | | PC | × | × | × | × | × | × | × | ○ | ○ |
| | | | ABS | × | × | × | × | × | × | × | × | × |
| | | | Al | ○ | ○ | × | ○ | × | × | ○ | ○ | × |
| | | | Cu | × | × | × | × | - | - | - | × | × |
| | | | SUS | ○ | × | × | × | × | × | ○ | × | × |

As shown in Table 1, in the cases where there was employed the hydrolyzable silane compound as the component (C) of the invention, such as (C-1), (C-2) and (C-3) as adhesion improving agents each having two nitrogen atoms in one molecule with one nitrogen atom thereof being bonded to a silicon atom through a divalent hydrocarbon group having at least five carbon atoms, silicone rubber cured products obtained by curing these compositions exhibited superior adhesiveness with regard to all types of adherends used in the test, both seven days after leaving the adherends under room temperature and seven days after keeping the adherends immersed in a water of 40°C (Working examples 1 to 12).

In contrast, as shown in Table 2, in the cases where, instead of the component (C) of the invention, there was employed a conventional adhesion improving agent such as (C-4) and (C-5) i.e. (C-4) as a silane compound having two nitrogen atoms in one molecule, but with one nitrogen atom being bonded to a silicon atom through the aforementioned divalent hydrocarbon group having three carbon atoms, or (C-5) as a silane compound only having one nitrogen atom in the molecule, a poor adhesiveness to each type of adherend was observed, and peeling was confirmed in many adherends after performing the water immersion test (Comparative examples 1 to 9).

Thus, it can be understood that the product of the invention is a room temperature-curable organopolysiloxane composition capable of yielding a silicone rubber cured product superior in adhesiveness and water-immersion adhesiveness with respect to general purpose resins (acrylic (AC) resin, polybutylene terephthalate (PBT) resin, polycarbonate (PC) resin and acrylonitrile-butadiene-styrene (ABS) resin) and metals (aluminum, copper and stainless steel).

### Industrial applicability

The present invention can provide a room temperature-curable organopolysiloxane composition superior in adhesiveness and water-immersion adhesiveness. Therefore, the organopolysiloxane composition of the invention is useful as, for example, an adhesive agent, a sealing material, a potting agent or a coating agent. Particularly, the organopolysiloxane composition of the invention can be favorably used as an adhesive agent for use in automobile parts or automobile oil seals; electric parts or electronic parts; architectural structures; or civil engineering structures.

## Claims

1. A room temperature-curable organopolysiloxane composition comprising
(A) 100 parts by mass of a diorganopolysiloxane having silicon atom-bonded hydroxyl groups and/or hydrolyzable groups at both terminals of a molecular chain, and exhibiting a viscosity of 20 to 1,000,000 mPa·s at 25°C,
(B) a hydrolyzable silane compound and/or a partial hydrolysis condensate thereof, having at least three silicon atom-bonded hydrolyzable groups in one molecule, the component (B) being other than the component (A) and in an amount of 0.1 to 40 parts by mass per 100 parts by mass of the component (A) and
(C) a hydrolyzable silane compound and/or a partial hydrolysis condensate thereof, having in one molecule a hydrolyzable group(s) and two nitrogen atoms of which one nitrogen atom is bonded to a silicon atom through a divalent hydrocarbon group having at least five carbon atoms, the component (C) being other than the components (A) and (B) and in an amount of 0.001 to 10 parts by mass per 100 parts by mass of the component (A).

2. The room temperature-curable organopolysiloxane composition according to claim 1, wherein the component (C) comprises a silane compound represented by the following general formula (3); and/or a partial hydrolysis condensate thereof
(R'O)_{3-c}R³_{c}Si-Z¹-NH-Z²-NH₂ (3)
wherein c represents an integer of 0 to 2, R'O represents a hydrolyzable group, R³ represents a substituted or unsubstituted monovalent hydrocarbon group, Z¹ represents a substituted or unsubstituted divalent hydrocarbon group having at least five carbon atoms, and Z² represents a substituted or unsubstituted divalent hydrocarbon group.

3. The room temperature-curable organopolysiloxane composition according to claim 2, wherein Z¹ in the general formula (3) of the component (C) represents a divalent hydrocarbon group expressed by C_{d}H_{2d} wherein d is an integer of 5 to 13.

4. The room temperature-curable organopolysiloxane composition according to any one of claim 1 to claim 3, wherein the component (C) comprises a silane compound represented by the following general formula (4); and/or a partial hydrolysis condensate thereof
(R'O)_{3-c}R³_{c}Si-C₈H₁₆-NH-C₂H₄-NH₂ (4)
wherein c represents an integer of 0 to 2, R'O represents a hydrolyzable group, and R³ represents a substituted or unsubstituted monovalent hydrocarbon group.

5. An automobile part or automobile oil seal having a cured product of the room temperature-curable organopolysiloxane composition as set forth in any one of claim 1 to claim 4.

6. An electric part or electronic part having a cured product of the room temperature-curable organopolysiloxane composition as set forth in any one of claim 1 to claim 4.

7. An architectural structure or civil engineering structure having a cured product of the room temperature-curable organopolysiloxane composition as set forth in any one of claim 1 to claim 4.

8. An adhesive agent, sealing material, potting agent or coating agent containing the room temperature-curable organopolysiloxane composition as set forth in any one of claim 1 to claim 4.
